# EUROPÄISCHE PATENTSCHRIFT

(11) **EP 2 896 281 B1**
(45) Veröffentlichungstag und Bekanntmachung des Hinweises auf die Patenterteilung: **10.03.2021**
(21) Anmeldenummer: 14151206.1
(22) Anmeldetag: 15.01.2014
(51) Int. Cl.: A01B 33/02, A01B 41/04, A01B 49/02

(54) **Bodenbearbeitungs-Vorrichtung für einen Untergrund**
Soil treatment device for a substrate
Dispositif de traitement du sol pour un sous-sol

(43) Veröffentlichungstag der Anmeldung: 22.07.2015
(73) Patentinhaber: Maschinenfabrik Bermatingen GmbH & Co. KG, 88697 Bermatingen (DE)
(72) Erfinder: Gotterbarm, Roderich, 88697 Bermatingen (DE)
(74) Vertreter: Engelhardt, Volker

(56) Entgegenhaltungen:
- EP-A1- 0 088 908
- DE-A1- 2 506 223
- DE-A1- 3 028 382
- DE-A1- 3 216 950

## Beschreibung

Die Erfindung bezieht sich auf eine Vorrichtung zur Bearbeitung eines Untergrundes, auf dem Pflanzenstümpfe überstehen und in den Wurzeln der Pflanzenstümpfe vorhanden sind, nach dem Oberbegriff des Patentanspruches 1.

Solche Bodenbearbeitungs-Vorrichtungen kommen insbesondere dann zum Einsatz, wenn abgeerntete Maisfelder für den Winter und die anschließende Nachsaat vorzubereiten sind. Die Maisfelder werden üblicherweise durch landwirtschaftliche Maschinen abgeerntet, die die einzelnen Maispflanzen etwa 20 bis 30 Zentimeter oberhalb des Untergrundes abschneiden und die Maiskolben aufnehmen, die Maiskörner von dem Grüngut der Maispflanze trennen und diese somit separieren.

Für die mit biologischer Masse betriebenen Biogasanlagen wird dagegen die gesamte Biomasse der Maispflanze benötigt, so dass möglichst wenig Pflanzenstümpfe auf dem Maisfeld zurückzulassen sind. Folglich hat sich in der Vergangenheit herausgestellt, dass unterschiedliche Bearbeitungen solcher Maisstoppelfelder erforderlich sind, um diese an die nächste Saatausbringung vorzubereiten. Die relativ hoch abstehenden Pflanzenstümpfe werden durch maschinelle Geräte abgeschnitten, von diesen zerkleinert und auf dem Feld zurückgelassen. Ein Maisfeld mit kurzen Pflanzenstümpfen kann dagegen von einer Bodenbearbeitungs-Walze bearbeitet werden in dem die Pflanzenstümpfe und deren Wurzeln untergegraben, also in das Erdreich des Untergrundes eingedrückt sind.

Nachteiligerweise können Maisfelder, auf denen die zerkleinerten Pflanzenreste aufgebracht sind, mit einer Bodenbearbeitungs-Walze nicht in das Erdreich eingedrückt werden bzw. die Wurzeln der Pflanzenstümpfe können durch die Bodenbearbeitungs-Walze nicht zerkleinert werden, denn die auf dem Maisfeld aufgebrachten Pflanzenreste behindern das Eindringen der Bodenbearbeitungs-Walze.

Wenn nämlich die Mais, -Pflanzenstümpfe knapp oberhalb des Untergrundes von der landwirtschaftlichen Maschine abgeschnitten sind, können durch Bodenbearbeitungs-Walzen die Wurzeln und restlichen Pflanzenstümpfe in dem Untergrund nicht eingegraben werden, da die zerkleinerten Pflanzenreste eine nahezu undurchdringliche Schicht oder Teppich bilden. Wenn die Pflanzenreste mehrere Zentimeter oberhalb des Untergrundes abstehen, ist es erforderlich, diese abzuschneiden und zu zerkleinern, um das Maifeld für den Winter und die nachfolgende Aussaat vorzubereiten.

Aus den EP0088908 und DE 25 06 223 sind Bodenbearbeitungsmaschinen bekannt geworden die abgeschnittene Pflanzenreste in einer Mischkammer mit den von einer Ackerfräse gelösten Bodenteilchen mischen.

Solche Maisstoppelfelderbearbeitungen haben sich in der Praxis zwar bewährt, sind jedoch aufgrund von Insektenbefall der Maispflanzen nicht mehr ausreichend. Während der Wachstumsphase der Maispflanzen werden diese von Ungeziefer, beispielsweise dem Maiszünsler, befallen, deren Larven in die Stängel der Maispflanzen gelangen. Während der kälteren Jahreszeit überstehen die aus den Larven geschlüpften Raupen in den auf dem Maisfeld zurückbleibenden Pflanzenstümpfen und Pflanzenwurzeln. Wenn diese ein entsprechend groß bemessenen Lebensraum vorfinden, in dem die Raupen vor Kälte und Feuchtigkeit geschützt sind. Wenn daher die Pflanzenstümpfe nicht ausreichend und wenn die in dem Untergrund eingewachsenen Pflanzenwurzeln nicht zerkleinert sind, dann finden die Maiszünsler-Raupen während der Wintermonate einen entsprechenden Unterschlupf vor, der dazu führt, dass viele der Raupenüberwintern und im Frühling schlüpfen, auf den jungen Maisblättern Eier legen und somit der Kreislauf der Maispflanzenbeschädigung erneut eintritt. Diese Raupen schlüpfen im Frühjahr aus und befallen die Jungpflanzen. Dies führt zu erheblichen Kosten, denn zum einen werden die Maispflanzen angefressen, wodurch die Ernteerträge reduziert sind, und zum anderen sind biologische und/oder chemische Maßnahmen zu ergreifen, um den Ungezieferbefall der Maispflanze einzudämmen.

Es ist daher Aufgabe der Erfindung, eine Bearbeitungs-Vorrichtung der eingangs genannten Gattung derart weiter zu bilden, dass mit diesem gleichzeitig die von dem Untergrund abstehenden Pflanzenstümpfe abgetrennt sind sowie eine Zerkleinerung der in den Untergrund eingewachsenen Pflanzenwurzeln durchführbar ist, ohne dass die abgetrennten Pflanzenstümpfe den Untergrund während der Wurzelbearbeitung bedecken und diesen Vorgang behindern.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in dem Rahmen ein Förderkanal vorgesehen ist, in dem die abgetrennten Pflanzenstümpfe durch das Schneidmesser oder-welle hineingefördert sind und dass der Förderkanal über die Bodenbearbeitungs-Walze geführt und dessen Austrittsöffnung bezogen auf die Fahrtrichtung nachfolgend zu der Bodenbearbeitungs-Walze verläuft, ist gewährleistet, dass zunächst die Pflanzenstümpfe von dem Untergrund abgetrennt sind und diese von dem Untergrund weggefördert sind, wodurch die nachfolgende Bodenbearbeitungs-Walze nahezu freien Zugang zu dem Erdreich des Untergrundes und damit zu den in diesem eingewachsenen Pflanzenwurzeln hat. Folglich können diese durch die Bodenbearbeitungs-Walze zerkleinert und ausgegraben werden.

Demnach werden die Pflanzenstümpfe und deren Wurzeln von der erfindungsgemäßen Vorrichtung vollständig erfasst, zerkleinert und wieder abgelegt, so dass der Lebensraum der Maiszünsler während der kälteren Jahreszeit zerstört ist.

Durch diese mechanische Zerstörung der zurückgebliebenen Pflanzenreste, nämlich der Pflanzenstümpfe und deren Wurzeln, wird somit der Lebensraum der Maiszünsler vorteilhafterweise vernichtet und gleichzeitig können die verbleibenden zerkleinerten Pflanzenreste als Humusbildung genutzt werden.

Die Größe der durch die erfindungsgemäße Vorrichtung zerkleinerten Pflanzenreste beträgt etwa 2 bis 3 Zentimeter. Derart klein bemessene Pflanzenreste können von dem Maiszünsler als Überwinterungsunterschlupf zwar genutzt werden, stellen jedoch keinen ausreichenden Schutz vor Kälte und Feuchtigkeit dar, zumal diese auf dem Untergrund aufliegen und nicht durch Erdreich geschützt sind.

Die erfindungsgemäße Bodenbearbeitungs-Vorrichtung kann als separates, eigenständig angetriebenes Fahrzeug mit entsprechender Antriebseinrichtung ausgestaltet sein oder aber an eine Antriebseinrichtung, beispielsweise einem Traktor, angehängt werden. Der Traktor dient zusätzlich als Antriebseinrichtung für die Schneidmesser oder -welle, die nämlich mit einer sehr hohen Umdrehungsgeschwindigkeit, vorzugsweise zwischen 1.000 und 4.000 Umdrehungen pro Minute, zu betreiben sind, um zum einen die von dem Untergrund abstehenden Pflanzenstümpfe mehrfach zu erfassen, abzuschneiden und diese in Richtung des Förderkanals zu bewegen, so dass diese mit einer entsprechend hohen Fördergeschwindigkeit in den Förderkanal eingeblasen sind.

Innerhalb des Förderkanals sind vorteilhafterweise weitere feste oder auch bewegliche Zerkleinerungsmesser, Häcksler oder dergleichen vorgesehen, durch die die eingeförderten Pflanzenstümpfe weiter zerkleinert werden. Als fest angeordnete Zerkleinerungshilfen dienen beispielsweise Schneidgitter.

Die Bodenbearbeitungs-Walze wird üblicherweise nicht angetrieben sondern rotiert aufgrund der Fahrbewegung der Antriebseinrichtung mit einer davon abhängenden Umfangsgeschwindigkeit. Folglich dreht die Walze gleichgerichtet zu der Fahrtrichtung. Es ist jedoch auch möglich, die Bodenbearbeitungs-Walze mit Hilfe eines separaten Antriebsmittels anzutreiben, so dass diese nicht nur gleichgerichtet sondern auch gegenläufig zu der Fahrtrichtung bewegt werden kann, um die Relativbewegung zwischen der Bodenbearbeitungs-Walze und dem Untergrund zu erhöhen. Dadurch werden nämlich die in dem Untergrund eingewachsenen Pflanzenwurzeln besser herausgerissen, erfasst und zerkleinert.

Eine besonders vorteilhafte Weiterbildung für die erfindungsgemäße Bearbeitungs-Vorrichtung besteht darin, zwischen dem Schneidmesser oder -welle und der Bodenbearbeitungs-Walze einen Rechen oder Kamm anzuordnen, der unmittelbar oberhalb des Untergrundes oder sogar teilweise in diesen eindringend angeordnet ist. Durch den Rechen oder Kamm sollen die Pflanzenreste aufgenommen und den Förderkanal bewegt werden, die von dem Schneidmesser oder der Schneidwelle nicht erfasst wurden. Gleichzeitig kann mit Hilfe des Rechens oder Kammes die Wurzel angehoben bzw. ausgerissen werden, um die nachfolgende Bodenbearbeitung durch die Walze zu erleichtern. Durch den Rechen oder Kamm wird folglich der Boden frei geräumt, so dass die nachfolgende Walze einen nahezu vollständig freien Zugang auf das Erdreich des Untergrundes hat.

Um die Beförderung der vom Rechen oder Kamm eingeführten Pflanzenreste zu verbessern, kann ein Gebläse vorgesehen werden, durch das ein Luftstrom erzeugt ist, durch den die Pflanzenreste von dem Kamm aufgenommen und in den Förderkanal bewegt sind.

Darüberhinaus kann es vorteilhaft sein, wenn die von dem Untergrund abstehenden Pflanzenstümpfe in mehreren unterschiedlichen Höhenniveaus zerschnitten sind. Dies kann dadurch erreicht werden, dass vor dem Schneidmesser oder Schneidwelle ein Schneidbalken vorgesehen ist, der oberhalb der von dem Schneidesser oder - welle gebildeten Schnittebene angeordnet ist und der lineare Schnittbewegungen ausführt. Durch diese linearen Schnittbewegungen sollen die Pflanzenstümpfe zerteilt sein. Üblicherweise ist eines der Messerreihen des Schneidbalkens feststehend angeordnet und der andere Messerbalken bewegt sich linear hin und her, so dass zwischen den V-förmig ausgestalteten Schnittkanten eine entsprechende Relativbewegung entsteht, durch die die in den Schnittkanten eingeführten Pflanzenstümpfe zerteilt sind.

Die auf dem Maisfeld zurückverbleibenden Pflanzenreste sind derart klein bemessen, dass Ungeziefer, beispielsweise die Raupen der Maiszünsler, keinen ausreichend groß bemessenen Lebensraum vorfinden, der ihnen über die kalte Jahreszeit ausreichend Schutz vor Kälte und Feuchtigkeit bietet. Durch die mechanische Zerkleinerung der Pflanzenstümpfe und deren Pflanzenwurzeln wird demnach der Lebenskreislauf für den Maiszünsler unterbrochen, so dass dadurch erreicht ist, dass im Frühjahr möglichst keine Raupen des Maiszünslers schlüpfen und ausfliegen. Zumindest wird der Anteil der geschlüpften Raupen erheblich minimiert gegenüber dem bekannten Bearbeitungsmaßnahmen von Maisstoppelfeldern. Zudem können biologische und/oder chemische Bekämpfungsmaßnahmen entfallen, wodurch Belastungen vermieden und Kosten reduziert sind.

In der Zeichnung ist ein erfindungsgemäßes Ausführungsbeispiel einer Bodenbearbeitungs-Vorrichtung dargestellt, die nachfolgend näher erläutert ist. Im Einzelnen zeigt:
- Figur 1: eine Bodenbearbeitungs-Vorrichtung, bestehend aus einer Antriebseinrichtung, mit der die Vorrichtung trieblich verbunden ist und aus einem Rahmen, an dem eine Schneidwelle und nachfolgend zu dieser eine Bearbeitungs-Walze rotierbar befestigt ist, in Seitenansicht,
- Figur 2: die Bodenbearbeitungs-Vorrichtung gemäß Figur 1, in vergrößerter Darstellung,
- Figur 3: die Bodenbearbeitungs-Vorrichtung gemäß Figur 2, in Draufsicht und
- Figur 4: die Bodenbearbeitungs-Vorrichtung gemäß Figur 2, an der zwischen der Schneidwelle und der Bearbeitungs-Walze ein Kamm oder Rechen zur Aufnahme von Pflanzenteilen und ein Gebläse vorgesehen ist sowie mit einem Schneidbalken, der oberhalb der Schnittkante der Schneidwelle und vorgelagert zu dieser verläuft.

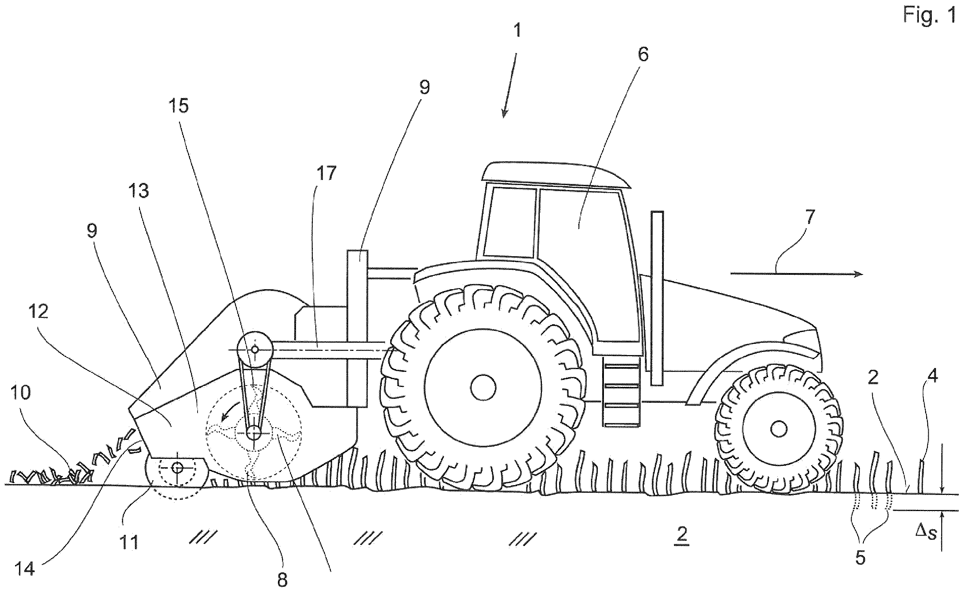

In den Figuren 1 bis 4 ist eine Bodenbearbeitungs-Vorrichtung 1 zu entnehmen, durch die ein Untergrund 2 von Pflanzenstümpfen 4 und deren Pflanzenwurzeln 5 zu befreien ist. Es hat sich nämlich herausgestellt, dass in den Pflanzenstümpfen 4 und den Pflanzenwurzeln 5 Raupen von Ungeziefern, beispielsweise Maiszünslern, die kältere und feuchtere Jahreszeit überleben können, wenn die Pflanzenstümpfe 4 und Pflanzenwurzeln 5 eine bestimmte Größe aufweisen, denn dadurch können diese Raupen einen Lebensraum vorfinden, der diese vor Kälte und Feuchtigkeit schützt. Zudem sind die Felder, beispielsweise die abgeernteten Maisbepflanzungen, für die Wintermonate und die nachfolgende Aussaat im Frühjahr vorzubereiten. Die auf den Maisfeldern verbliebenen Pflanzenstümpfe 4 und Pflanzenwurzeln 5 sollen möglichst verrotten und den Untergrund 2 mit Humusmasse versorgen.

Die Bodenbearbeitungs-Vorrichtung 1 besteht aus einer Antriebseinrichtung 6, durch die die Vorrichtung 1 in eine Fahrtrichtung 7 bewegt werden kann. Die Antriebseinrichtung 6 kann dabei als eigenständiger Antrieb, beispielsweise in Form eines Verbrennungsmotors, unmittelbar der Vorrichtung 1 zugeordnet sein oder die Antriebseinrichtung 6 ist, wie in den abgebildeten Figuren dargestellt, als Traktor ausgestaltet. Die Vorrichtung 1 kann als separates Bauteil ausgeführt sein und demnach an dem Traktor 6 vorne und/oder hinten und/oder seitlich versetzt zu diesem, und zwar auch unterhalb des Motors des Traktors 6, angehängt werden. Die Antriebseinrichtung 6 in Form des Traktors bewegt demnach nicht nur die Vorrichtung 1 über das zu bearbeitenden Maisfeld, sondern kann auch entsprechende Kräfte bzw. Drehmomente zur Verfügung stellen, durch die weitere Bauteile der Vorrichtung 1, wie dies nachfolgend im Einzelnen näher erläutert ist, angetrieben werden können.

Die von dem Untergrund 2 abstehenden Pflanzenstümpfe 4 sind zunächst von dem Untergrund 2 zu trennen. Zu diesem Zweck ist der Vorrichtung 1 eine Schneidwelle 8 oder eine Vielzahl von Schneidmessern zugeordnet, die um eine Achse rotieren. Die Umdrehungsgeschwindigkeit der Schneidwelle 8 kann zwischen 1.000 und 4.000 Umdrehungen pro Minute liegen. Die Umdrehungsrichtung der Schneidwelle 8 ist bezogen auf die Fahrtrichtung 7 gegenläufig zu dieser. Dies bedeutet, dass zum einen die Schneidwelle 8 die Pflanzenstümpfe 4 unmittelbar oberhalb des Untergrundes 2 erfasst und diese durchschneidet und sodann vom Untergrund 2 wegschleudert.

Die Schneidwelle 8 ist von einem Rahmen 9 bereichsweise umgriffen oder von diesem gekapselt, so dass die Schneidwelle 8 nahezu vollständig ummantelt ist; lediglich in Richtung der Pflanzenstümpfe 4 bzw. der Fahrtrichtung 7 und zwischen dem Untergrund 2 und der Schneidwelle 8 ist ein Luftspalt vorgesehen. Wenn demnach die Pflanzenstümpfe 4 von der Schneidwelle 8 von dem Untergrund 2 abgetrennt sind, werden diese in Richtung des Rahmens 9 transportiert. Zur Aufnahme der abgeschnittenen Pflanzenstümpfe 5 ist in dem Rahmen 9 ein Förderkanal 12 vorgesehen, in den folglich die abgetrennten Pflanzenstümpfe 4 hineingefördert sind.

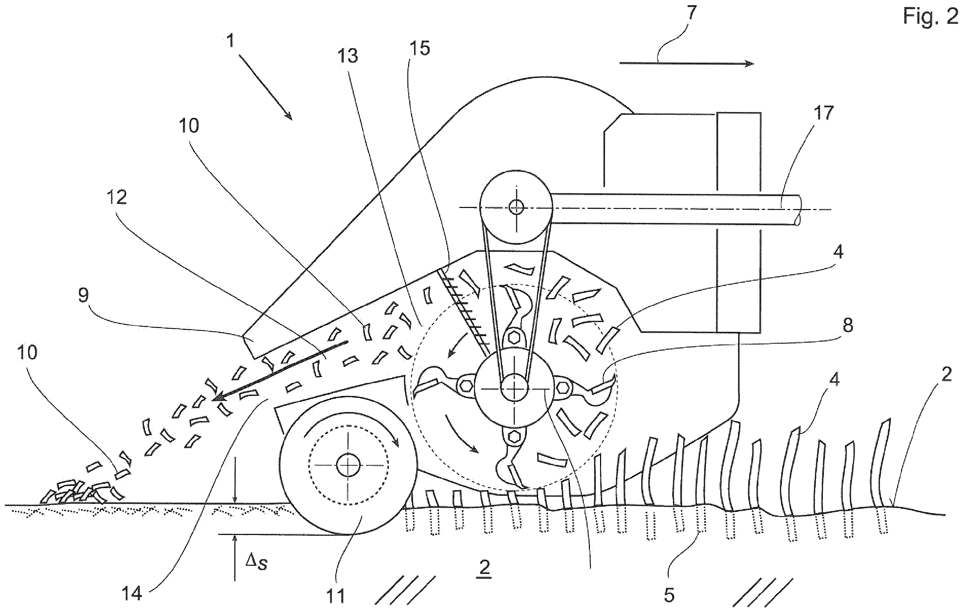

Bezogen auf die Fahrtrichtung 7 ist nachfolgend zu der Schneidwelle 8 eine Bodenbearbeitungs-Walze 11 an dem Rahmen 9 rotierbar befestigt. Durch die Fahrgeschwindigkeit der Antriebseinrichtung 6 wird in den Figuren 1 und 2 die Walze 11 in Rotation versetzt. An der Walze 11 sind Zähne, Klauen, Schneidmesser, Schaufeln oder dergleichen angebracht, die gemäß Figur 2 etwa ein bis drei Zentimeter tief in den Untergrund 2 eindringen und die dort eingewachsenen Pflanzenwurzeln 5 ausreißen, zerkleinern und auf die Oberseite des Untergrundes 2 ablegen.

Zu einer optimalen Entfernung der Pflanzenwurzeln 5 kann es ausschließlich dann kommen, wenn die Walze 11 einen möglichst ungehinderten Zugang zu dem Untergrund 2 hat. Dies bedeutet, dass der Untergrund 2 möglichst von abgetrennten Pflanzenstümpfen 4 zu befreien ist. Um dies zu erreichen, ist der Förderkanal 12 vorgesehen, der zum einen die abgetrennten Pflanzenstümpfe 4 aufnimmt und diese über die Bodenbearbeitungs-Walze 11 leitet. Eine Eintrittsöffnung 13 des Förderkanals 12 ist folglich im Bereich der Schneidwelle 8 angeordnet und die Austrittsöffnung 14 des Förderkanals 12 bezogen auf die Fahrtrichtung 7 nachfolgend zu der Bodenbearbeitungs-Walze 11 vorgesehen, so dass demnach die im Förderkanal 12 aufgenommenen Pflanzenstümpfe 4 über die Walze 11 geleitet sind und nach der erfolgten Bodenbearbeitung durch die Walze 11 auf dem Untergrund 2 abgelegt werden.

Die Schneidwelle 8 wird mit Hilfe der Abtriebswelle 17, die ein gewisses Drehmoment an der Antriebseinrichtung 6 abgreift, angetrieben und die Walze 11 dreht entsprechend der Fahrgeschwindigkeit der Antriebseinrichtung 6 mit. Die Drehrichtung der Walze 11 ist daher zu der Fahrtrichtung 7 gleich gerichtet, also entgegengesetzt zu der Drehrichtung der Schneidwelle 8.

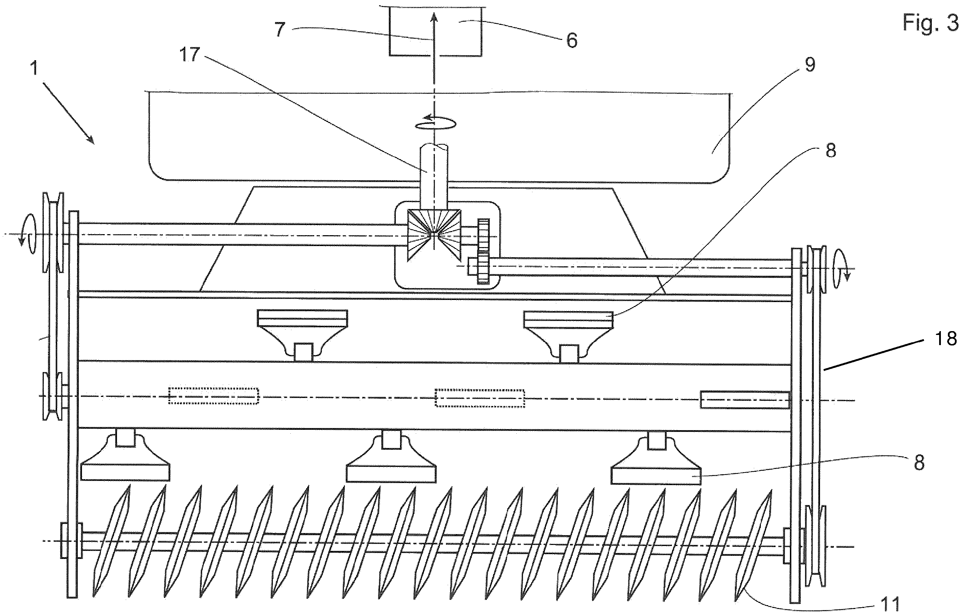

Falls es gewünscht ist, kann die Bodenbearbeitungs-Walze 11 eigenständig durch ein Antriebsmittel 18 gemäß Figur 3 sowohl gegenläufig, als auch gleichgerichtet zu der Fahrtrichtung 7 angetrieben sein. Die Umdrehungsgeschwindigkeiten der Schneidwelle 8 und der Walze 11 sind unterschiedlich, so dass die Antriebsstränge voneinander zu trennen sind. Gleichwohl kann die Antriebsenergie für das Antriebsmittel 17 und für die Rotation der Schneidwelle 8 von der Antriebseinrichtung 6 zur Verfügung gestellt sein. Es ist auch denkbar, das Antriebsmittel 17 für die Walze 11 als eigenständigen Antrieb auszuführen, der pneumatisch, hydraulisch, elektrisch oder mechanisch betrieben ist.

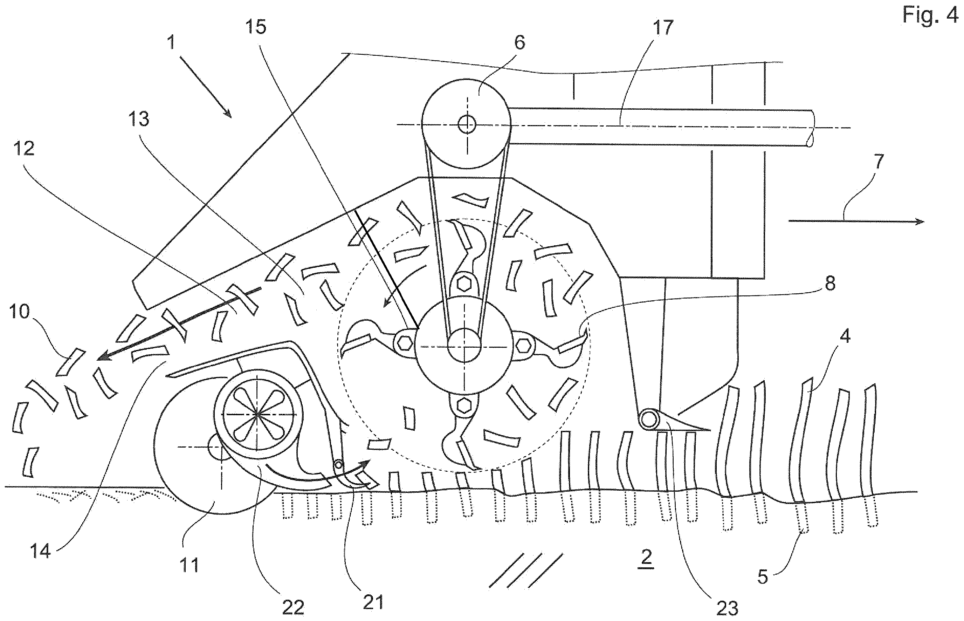

In Figur 4 ist dargestellt, dass zwischen der Schneidwelle 8 und der Bodenbearbeitungs-Walze 11 ein Rechen oder Kamm 21an dem Rahmen 9 angeordnet ist, durch den die Oberfläche des Untergrundes 2 von nicht aufgenommenen Pflanzenstümpfen 4 befreit ist. Der Rechen oder Kamm 21 weist eine Vielzahl von gekrümmten oder gebogenen Zinken auf, die entweder mit ihrem freien Ende oberhalb des Untergrundes 2 oder mit Teilen deren freien Enden innerhalb des Untergrundes 2 verlaufen bzw. eintauchen. Durch die Fahrgeschwindigkeit der Vorrichtung 1 werden die von dem Kamm oder Rechen 21 aufgenommenen Pflanzenstümpfe 4 nach oben, also in Richtung des Rahmens 9, transportiert und gelangen durch eine weitere Eintrittsöffnung 13 in den Förderkanal 12. Um diese Aufnahme weiter zu verbessern, ist ein Gebläse 22 vorgesehen, durch das ein Luftstrom erzeugt wird, durch den die von dem Rechen oder Kamm 21 aufgenommen Pflanzenstümpfe 4 eingesaugt und in Richtung des Förderkanals 12 transportiert sind.

Zusätzlich ist es möglich, die von dem Untergrund 2 abstehenden Pflanzenstümpfe 4, die oftmals eine Höhe von 20 bis 30 Zentimeter aufweisen, mehrfach zu zerkleinern und von dem Untergrund 2 abzutrennen. Um dies zu erreichen, ist bezogen auf die Fahrtrichtung 7 der Schneidwelle 8 ein Schneidbalken 23 vorgeschaltet. Der Schneidbalken 23 besteht aus einer ersten feststehenden Messerreihe und aus einer zweiten linear hin und her bewegbaren Messerreihe, die gemeinsam jeweils eine V-förmige Aufnahmeöffnung für die Pflanzenstümpfe 4 bilden. Sobald einer der Pflanzenstümpfe 4 zwischen die beiden Messerreihen des Schneidbalkens 23 gelangt, werden diese durch die Linearbewegung des Schneidbalkens 23 zerteilt.

Es ist ohne weiteres denkbar, mehrere dieser Schneidbalken 23 in unterschiedlichen Höhenniveaus vorzusehen, um die Länge der Pflanzenstümpfe 4 derart zu verkleinern, dass diese ohne weiteres von der Schneidwelle 8 in Richtung des Förderkanals 12 transportiert werden können. Demnach können der Kamm bzw. Rechen 21, das Gebläse 22 und der eine oder die mehreren Schnittbalken 213 wahlweise an die Vorrichtung 1 montiert bzw. vorgesehen werden und zwar, in Abhängigkeit von der Beschaffenheit des zu bearbeitenden Maisfeldes.

Wenn die Zinken des Rechens bzw. Kammes 21 in das Erdreich des Untergrundes 2 eindringen, werden vorteilhafterweise die Pflanzenwurzeln 5 durch diese herausgerissen und bereits in Richtung des Förderkanals 12 transportiert, so dass auch die Pflanzenwurzeln 5 der weiteren Bearbeitung des Untergrundes 2 durch die Bodenbearbeitungs-Walze 11 nicht entgegenwirken.

Um die aufgenommenen Pflanzenstümpfe 4 in entsprechend kleine Pflanzenreste 10 zu zerkleinern, ist in dem Förderkanal 12 eine Häckseleinrichtung 15 vorgesehen. Die Häckseleinrichtung 15 kann entweder als linear bewegliche Einrichtung mit Schneidmesser, Schneidkanten oder dergleichen ausgestaltet sein oder die Häckseleinrichtung 15 besteht aus einem fest an dem Rahmen 9 angebrachten Schneidgitter, durch das die abgetrennten Pflanzenstümpfe 4 jeweils gefördert sind. Durch die Eigengeschwindigkeit der Pflanzenstümpfe 4 werden diese durch die Häckseleinrichtung 15 weiter zerkleinert, so dass die aus dem Förderkanal 12 ausgeworfenen Pflanzenreste 10 eine derart kleine Struktur aufweisen, die als Unterschlupf für die Maiszünslerraupen nicht geeignet ist, denn diese schützen die Raupen nicht vor Kälte und Feuchtigkeit. Je kleiner demnach die ausgeworfenen Pflanzenreste 10 sind, desto geringer ist die Wahrscheinlichkeit, dass die Raupen von Ungeziefern die kältere und feuchtere Jahreszeit überstehe.

## Patentansprüche

1. Vorrichtung (1) zur Bearbeitung eines Untergrundes (2), auf dem Pflanzenstümpfe (4) überstehen und in dem Wurzeln (5) der Pflanzenreste vorhanden sind,
- mit einer Antriebseinrichtung (6), durch die die Bearbeitungs-Vorrichtung (1) in eine Fahrtrichtung (7) bewegbar ist,
- mit einem oberhalb des Untergrundes (2) angeordneten Schneidmesser oder-welle (8), die gegenläufig zur Fahrtrichtung (7) angetrieben ist und durch die die Pflanzenstümpfe (4) von dem Untergrund (2) abgetrennt sind, und
- mit einem Rahmen (9), durch den die Schneidmesser oder -welle (8) bereichsweise gekapselt ist, an dem eine in den Untergrund (2) eindringende Bodenbearbeitungs-Walze (11) drehbar befestigt ist wobei die Walze (11) benachbart zu dem Schneidmesser oder-welle (8) und bezogen auf die Fahrtrichtung (7) nachfolgend zu dieser angeordnet ist,
wobei in dem Rahmen (9) ein Förderkanal (12) vorgesehen ist, in dem die abgetrennten Pflanzenstümpfe (4) durch das Schneidmesser oder -welle (8) hineingefördert sind, wobei der Förderkanal (12) über die Bodenbearbeitungs-Walze (11) geführt und dessen Austrittsöffnung (14) bezogen auf die Fahrtrichtung (7) nachfolgend zu der Bodenbearbeitungs-Walze (11) verläuft,
**dadurch gekennzeichnet, dass** in dem Förderkanal (12) eine Häckseleinrichtung (15), vorzugsweise in Form eines Schneidgitters, -messers oder Schneidkanten, vorgesehen ist, durch die die eingeführten Pflanzenstümpfe (4) zerkleinert sind.

2. Vorrichtung (1) nach Anspruch 1,
**dadurch gekennzeichnet,**
**dass** die Bodenbearbeitungs-Walze (11) an dem Rahmen (9) höhenverstellbar angeordnet ist und dass die Eindringtiefe der Walze (11) in den Untergrund (2) einstellbar ist.

3. Vorrichtung (1) nach einem der vorgenannten Ansprüche,
**dadurch gekennzeichnet,**
**dass** die Antriebseinrichtung (6) als Zugmaschine (16), vorzugsweise als Traktor (16) ausgestaltet ist und dass durch die Antriebseinrichtung (6) das Schneidmesser (8) oder die Schneidwelle vorzugsweise mit einer Umdrehungsgeschwindigkeit von 1.000 bis 4.000 Umdrehungen pro Minute angetrieben ist.

4. Vorrichtung (1) nach einem der vorgenannten Ansprüche,
**dadurch gekennzeichnet,**
**dass** die Bodenbearbeitungs-Walze (11) durch die Fahrbewegung der Antriebseinrichtung (6) in Rotation versetzt ist und dass die Bodenbearbeitungs-Walze (11) gleich gerichtet zu der Fahrtrichtung (7) bewegt ist.

5. Vorrichtung (1) nach einem der Ansprüche 1 bis 3,
**dadurch gekennzeichnet,**
**dass** die Bodenbearbeitungs-Walze (11) mit einem Antriebsmittel (18) trieblich verbunden ist, und dass die Rotation der Bodenbearbeitungs-Walze (11) durch das Antriebsmittel (18) gleichgerichtet oder gegenläufig bezogen auf die Fahrtrichtung (7) der Antriebseinrichtung (6) erfolgt.

6. Vorrichtung (1) nach Anspruch 5,
**dadurch gekennzeichnet,**
**dass** das Antriebsmittel (18) der Bodenbearbeitungseinrichtung hydraulisch, pneumatisch, mechanisch oder elektrisch angetrieben ist und dass das Antriebsmittel (18) trieblich mit der Antriebseinrichtung (6) verbunden ist.

7. Vorrichtung nach einem der vorgenannten Ansprüche,
**dadurch gekennzeichnet,**
**dass** zwischen dem Schneidmesser oder -welle (8) und der Bodenbearbeitungs-Walze (11) ein Kamm oder Rechen (21) angeordnet ist durch den die auf dem Untergrund (2) aufliegenden Schneidmesser Pflanzenstümpfe (4) von diesem aufgesammelt und in Richtung des Förderkanals (12) transportiert sind.

8. Vorrichtung nach Anspruch 7,
**dadurch gekennzeichnet,**
**dass** der Kamm oder Rechen (21) aus einer Vielzahl von gebogenen Zinken besteht.

9. Vorrichtung nach Anspruch 8,
**dadurch gekennzeichnet,**
**dass** die freien Enden der Zinken unmittelbar oberhalb des Untergrundes (2) enden oder dass die freien Enden der Zinken des Rechens oder Kamms (21) in den Untergrund (2) eintauchen und die in diesem vorhandenen Pflanzenwurzeln (5) ausreißen.

10. Vorrichtung nach einem der Ansprüche 7 bis 9,
**dadurch gekennzeichnet,**
**dass** zwischen dem Kamm oder Rechen (21) und dem Förderkanal (12) ein Gebläse (22) vorgesehen ist, durch das ein Luftstrom erzeugt ist, durch den die von dem Kamm oder Rechen (21) aufgenommenen Pflanzenstümpfe (4) und Pflanzenwurzeln (5) in Richtung des Förderkanals (12) bewegt sind.

11. Vorrichtung nach einem der vorgenannten Ansprüche,
**dadurch gekennzeichnet,**
**dass** bezogen auf die Fahrtrichtung (7) der Vorrichtung (1) zu dem Schneidmesser oder -welle (8) vorgeschaltet mindestens ein Schneidbalken (23) angebracht ist oder sind, der oder die in unterschiedlichen Abständen zu dem Untergrund (2) angeordnet sind.

12. Vorrichtung nach Anspruch 11,
**dadurch gekennzeichnet,**
**dass** der Schneidbalken (23) aus einer ersten feststehenden Messerreihe und aus einer zweiten Messerreihe gebildet ist, die linear und relativ zu der ersten Messerreihe angetrieben ist.

13. System mit mehreren Vorrichtungen nach einem der vorgenannten Ansprüche **dadurch gekennzeichnet,**
**dass** die Vorrichtungen (1) an einer Antriebseinrichtung (6) anhängbar oder anbringbar sind und dass die Vorrichtungen (1) in zueinander versetzten Laufbahnen angeordnet sind.

## Claims

1. A soil treatment device (1) for a substrate (2) on which plant stumps (4) protrude and in which roots (5) of the plant remains are present,
- with a driving device (6) by means of which the treatment device (1) can be moved in a direction of travel (7),
- with a cutting knife or shaft (8) arranged above the substrate (2), which is driven in the opposite direction to the direction of travel (7) and by means of which the plant stumps (4) are separated from the substrate (2), and
- with a frame (9), by means of which areas of the cutting knife or shaft (8) are encapsulated, to which a soil processing roller (11) penetrating into the substrate (2) is rotatably fastened, the roller (11) being arranged adjacent to the cutting knife or shaft (8) and downstream of the latter, with respect to the direction of travel (7), in which a conveying channel (12) is provided in the frame (9) into which the separated plant stumps (4) are conveyed by the cutting knife or shaft (8), in which
the conveying channel (12) is guided over the soil processing roller (11) and its outlet opening (14) runs downstream of the soil processing roller (11) in relation to the direction of travel (7),
**characterised in that,**
a chopping device (15), preferably in the form of a cutting grid, knife or cutting edges, is provided in the conveying channel (12), by means of which the introduced plant stumps (4) are reduced in size.

2. The device (1) according to claim 1,
**characterised in that,**
the soil processing roller (11) is arranged on the frame (9) in such a way that its height can be adjusted, and in such a way that the penetration depth of the roller (11) into the substrate (2) can be adjusted.

3. The device (1) according to one of the aforementioned claims,
**characterised in that,**
the driving device (6) is designed as a towing machine (16), preferably as a tractor (16), and **in that** the cutting knife (8) or the cutting shaft is driven by the driving device (6) preferably at a rotational speed of 1,000 to 4,000 revolutions per minute.

4. The device (1) according to one of the aforementioned claims,
**characterised in that,**
the soil processing roller (11) is set in rotation by the travel movement of the driving device (6) and **in that** the soil processing roller (11) is moved in the same direction as the direction of travel (7).

5. The device (1) according to one of claims 1 to 3,
**characterised in that,**
the soil processing roller (11) is driveably connected to a driving means (18), and **in that** the soil processing roller (11) is rotated by the driving means (18) in the same direction or in the opposite direction with respect to the direction of travel (7) of the driving device (6).

6. The device (1) according to claim 5,
**characterised in that,**
the driving means (18) of the soil processing device is driven hydraulically, pneumatically, mechanically or electrically, and **in that** the driving means (18) is driveably connected to the driving device (6).

7. The device (1) according to one of the aforementioned claims,
**characterised in that,**
a comb or rake (21) is arranged between the cutting knife or shaft (8) and the soil processing roller (11), by means of which comb or rake the plant stumps (4) lying on the substrate (2) are collected from the latter and transported in the direction of the conveying channel (12).

8. The device (1) according to claim 7,
**characterised in that,**
the comb or rake (21) consists of a plurality of curved tines.

9. The device (1) according to claim 8,
**characterised in that,**
the free ends of the tines terminate directly above the substrate (2) or that the free ends of the tines of the rake or comb (21) penetrate into the substrate (2) and pull out the plant roots (5) that are present therein.

10. The device according to one of claims 7 to 9,
**characterised in that,**
a blower (22) is provided between the comb or rake (21) and the conveying channel (12), this blower (22) generating an air flow by means of which the plant stumps (4) and plant roots (5) picked up by the comb or rake (21) are moved in the direction of the conveying channel (12).

11. The device according to one of the aforementioned claims,
**characterised in that,**
in relation to the direction of travel (7) of the device (1), at least one cutting bar (23) is or are mounted upstream of the cutting knife or shaft (8), the cutting bar or bars (23) being arranged at different distances from the substrate (2).

12. The device according to claim 11,
**characterised in that,**
the cutting bar (23) is formed from a first fixed row of blades and from a second row of blades which is driven linearly and relative to the first row of blades.

13. A system with several devices according to one of the aforementioned claims,
**characterised in that,**
the devices (1) can be suspended from or attached to a driving device (6), and **in that** the devices (1) are arranged in mutually offset movement tracks.

## Revendications

1. Dispositif (1) servant au traitement d'un sol (2), duquel dépassent des souches de plantes (4) et dans lequel il se trouve les racines des restes de plantes,
- avec un dispositif d'entraînement (6) qui permet de déplacer le dispositif de traitement du sol (1) dans une direction (7),
- avec un couteau ou un arbre de coupe (8) disposé au-dessus du sol (2), entraîné dans le sens contraire au sens de déplacement (7) et qui sépare les souches de plantes (4) du sol (2), et
- avec un cadre (9), par lequel les couteaux ou les arbres de coupe (8) sont partiellement recouverts, sur lequel il est fixé en rotation un cylindre de traitement du sol (11) pénétrant dans le sol (2), où le cylindre (11) est disposé à proximité du couteau ou de l'arbre de coupe (8) et, référé au sens de déplacement (7), suite à ceux-ci,
la cadre (9) possédant un canal de refoulement (12) recevant les souches de plantes (4) découpées par le couteau ou l'arbre de coupe (8),
le canal de refoulement (12) s'étendant sur le cylindre de traitement du sol (11) et dont, référé au sens de déplacement (7), l'ouverture de sortie (14) se trouve en aval du cylindre de traitement du sol (11),
**caractérisé en ce que**
dans le canal de refoulement (12), il est prévu un hachoir (15), de préférence sous la forme d'une grille de coupe, d'un couteau ou de bords de coupe qui assurent le broyage des souches de plantes (4).

2. Dispositif (1) d'après la revendication 1,
**caractérisé en ce que**
le cylindre de traitement du sol (11) est monté, réglable en hauteur, sur le cadre (9) et que la profondeur de pénétration du cylindre dans le sol (2) est réglable.

3. Dispositif (1) d'après une des revendications précédentes,
**caractérisé en ce que**
le dispositif d'entraînement (6) est conçu sous la forme d'une machine de traction (16), de préférence en tant que tracteur (16), et que le dispositif d'entraînement (6) assure l'entraînement du couteau ou de l'arbre de coupe (8) de préférence avec une vitesse de rotation de 1.000 à 4.000 tours par minute.

4. Dispositif (1) d'après une des revendications précédentes,
**caractérisé en ce que**
le cylindre de traitement du sol (11) est mis en rotation par le déplacement du dispositif d'entraînement (6) et que le cylindre de traitement du sol (11) est déplacé conformément au sens de déplacement (7).

5. Dispositif (1) d'après une des revendications 1 à 3 ,
**caractérisé en ce que**
le cylindre de traitement du sol (11) est en liaison d'entraînement avec un moyen d'entraînement (18) et que, référée au sens de déplacement (7) du dispositif d'entraînement (6), la rotation du cylindre de traitement du sol (11) assuré par le moyen d'entraînement (18) se fait en sens identique ou opposé.

6. Dispositif (1) d'après la revendication 5,
**caractérisé en ce que**
le moyen d'entraînement (18) de l'installation de traitement du sol possède un entraînement hydraulique, pneumatique, mécanique ou électrique, et que le moyen d'entraînement (18) est en liaison d'entraînement avec le dispositif d'entraînement (6).

7. Dispositif d'après une des revendications précédentes,
**caractérisé en ce que**,
entre le couteau ou l'arbre de coupe (8) et le cylindre de traitement du sol (11), il est prévu un peigne ou un râteau (21) qui a pour effet que les couteaux suivant la surface du sol (2) ramassent les souches de plante (4) puis les transporte vers le canal de refoulement (12).

8. Dispositif d'après la revendication 7,
**caractérisé en ce que**
le peigne ou le râteau (21) consiste en une multitude de dents courbées.

9. Dispositif d'après la revendication 8,
**caractérisé en ce que**
les extrémités libres des dents se terminent directement au-dessus du sol (2) ou que les extrémités libres des dents du râteau ou du peigne (21) plongent dans le sol (2) pour en arracher les racines (5) des plantes présentes.

10. Dispositif d'après une des revendications 7 à 9,
**caractérisé en ce que**,
entre le peigne ou le râteau (21) et le canal de refoulement (12), il est prévu une soufflante (22) générant un flux d'air qui transporte les souches des plantes (4) et les racines des plantes (5) récupérées par le peigne ou le râteau (21) en direction du canal de refoulement (12).

11. Dispositif d'après une des revendications précédentes,
**caractérisé en ce que**
référé au sens de déplacement (7) du dispositif (1), il est prévu, en amont du couteau ou de l'arbre de coupe (8), au moins une barre de coupe (23) disposées à des distances différentes du sol (2).

12. Dispositif d'après la revendication 11,
**caractérisé en ce que**
la barre de coupe (23) est composée d'une première rangée de couteaux stationnaires et d'une deuxième rangée de couteaux entraînée en direction linéaire et relativement à la première rangée de couteaux.

13. Système composé de plusieurs dispositifs d'après une de revendications précédentes,
**caractérisé en ce que**
les dispositifs (1) se laissent atteler ou fixer sur un équipement d'entraînement (6) et que les dispositifs (1) sont disposés sur des pistes décalées l'une par rapport à l'autre.
